Europäisches Patentamt

European Patent Office

Office européen des brevets

(11) Veröffentlichungsnummer: **0 263 344**
B1

(12) **EUROPÄISCHE PATENTSCHRIFT**

(45) Veröffentlichungstag der Patentschrift:
22.08.90

(21) Anmeldenummer: 87113765.9

(22) Anmeldetag: 21.09.87

(51) Int. Cl.⁵: **B01D 21/02**, B01D 21/26,
B04B 1/02, A61C 17/14

(54) Vorrichtung zum Abscheiden von feinen Feststoffpartikeln, insbesondere Amalgampartikeln, aus Abwasser.

(30) Priorität: 02.10.86 DE 3633494

(43) Veröffentlichungstag der Anmeldung:
13.04.88 Patentblatt 88/15

(45) Bekanntmachung des Hinweises auf die Patenterteilung:
22.08.90 Patentblatt 90/34

(84) Benannte Vertragsstaaten:
CH DE FR GB IT LI SE

(56) Entgegenhaltungen:
WO-A-86/03669
DE-A-2 325 694
US-A-3 623 657
US-A-3 967 777

(73) Patentinhaber: Dürr Dental GmbH & Co. KG,
Höpfigheimer Strasse 17 Postfach 305,
D-7120 Bietigheim-Bissingen(DE)

(72) Erfinder: Schnepf, Jürgen, Dipl.-Ing. (FH), Eppinger
Strasse 7, D-7100 Heilbronn-Böckingen(DE)

(74) Vertreter: Ostertag, Reinhard et al, Patentanwälte Dr.
Ulrich Ostertag Dr. Reinhard Ostertag Eibenweg 10,
D-7000 Stuttgart 70(DE)

ACTORUM AG

**Beschreibung**

Die Erfindung betrifft eine Vorrichtung zum Abscheiden von feinen Feststoffpartikeln, insbesondere Amalgampartikeln, aus Abwasser gemäß dem Oberbegriff des Anspruches 1.

Eine derartige Vorrichtung ist in der DE-A 30 30 614 beschrieben. Bei ihr ist an das untere Ende des Bodens der Zentrifugentrommel ein Pumpstutzen angeformt, welcher bis zu dem vorgegebenen Pegel in den Sedimentierbehälter hineinragt und bei umlaufender Zentrifugentrommel alle Flüssigkeit aus dem Sedimentierbehälter ins Innere der Zentrifugentrommel zurückpumpt, welche über seiner Unterkante liegt.

Bei dieser bekannten Vorrichtung streift somit der Rückförderstutzen ständig auf der Oberfläche der im Sedimentierbehälter befindlichen Flüssigkeit und fängt kurzfristig wieder an zu fördern, wenn der Flüssigkeitsspiegel lokal auf Grund von Erschütterungen oder Vibrationen vorübergehend ansteigt oder zusätzliche Flüssigkeit über Leckpfade in den Sedimentierbehälter gerät. Diese Vorgänge stören den Sedimentiervorgang, weshalb für das Sedimentieren im wesentlichen nur diejenigen Zeiten von Interesse sind, über welche hinweg die Zentrifugentrommel stillsteht. Bei intermittierendem Betrieb der Zentrifuge wird die Flüssigkeit im Sedimentierbehälter sowohl beim Anhalten der Zentrifugentrommel (Zufließen des Schlammes) als auch beim Wiederingangsetzen der Zentrifugentrommel (Absaugen der über dem vorgegebenen Pegel stehende Flüssigkeitsmenge) stark bewegt, was ebenfalls im Hinblick auf das Sedimentieren sehr nachteilig ist.

Die WO-A 8 603 669 betrifft einen Amalgamabscheider mit integriertem Luftabscheide-Zyklon. Das Sammeln abgeschiedenen Amalgams erfolgt in einem Sedimentierkasten, der zugleich als Auffangbehälter für in dem Zyklon abgetrennte Flüssigkeit dient. Aus dem Sammelbehälter wird intermittierend Flüssigkeit unter Verwendung eines Saughebers und einer Hilfspumpe in die Überlauf-Zentrifuge gedrückt. Der sich im Betrieb der Zentrifuge an deren Umfangswand ansammelnde Amalgamschlamm sinkt beim Anhalten der Zentrifuge unter Schwerkrafteinwirkung in einen Auffangbehälter und wird über eine Schlamm-Rückführleitung durch Unterdruckbeaufschlagung zum Einlaß des Zyklons der kombinierten Einheit zurückgeführt. Was die Abscheidung betrifft, bildet dieses bekannte Geräte somit eine Reihenschaltung aus einem Sedimentierbehälter und nachgeschalteter Zentrifuge, wobei eine Schlammrückführung vom Zentrifugengehäuse zum Sedimentier- oder Sammelbehälter vorgesehen ist.

In der DE-A 2 325 694 ist ferner eine Schälrohrzentrifuge offenbart. Die Flüssigkeitszufuhr erfolgt von der Unterseite der Zentrifugentrommel her, die einen nach unten herabhängenden Saugstutzen hat, welcher mit radialen Flügeln besetzt ist. Die am Zentrifugenboden angeformte Pumpe dient dem ständigen Zuführen des zu zerlegenden Gemisches. Die abgeschiedenen Feststoffe werden in einem im Inneren der Zentrifugentrommel angeordneten Einsatz zurückgehalten, der unter Demontage der Trommel in regelmässigen Abständen herausgenommm werden muß.

In der US-A 3 623 657 ist eine Zentrifuge gezeigt, bei der das zu zerlegende Gemisch durch eine Umwälzpumpe von unten her in die Zentrifugentrommel eingespeist wird.

Die US-A 3 967 777 offenbart eine Zentrifuge zum Abtrennen von Kohlenwasserstoffen aus Teersänden, welche mehrere Zentrifugierstufen umfaßt.

Durch die vorliegende Erfindung soll eine Vorrichtung gemäß dem Oberbegriff des Anspruches 1 so weitergebildet werden, daß der Sedimentiervorgang ruhiger und unbehinderter erfolgen kann.

Diese Aufgabe ist erfindungsgemäß gelöst durch eine Vorrichtung gemäß Anspruch 1.

Da bei der erfindungsgemäßen Vorrichtung eine völlig unabhängige Rückförderpumpe vorgesehen ist, kann diese gerade zu solchen Zeitpunkten in Betrieb genommen werden, welche für den Sedimentiervorgang am vorteilhaftesten sind. So kann die Rückförderpumpe insbesondere erst kurz vor demjenigen Zeitpunkt eingeschaltet werden, zu welchem der Sedimentierbehälter ein neues Schlammvolumen aus dem Inneren der Zentrifugentrommel übernehmen soll, nämlich wenn letztere abgeschaltet wird. Bis zu diesem Zeitpunkt kann im Prinzip die Flüssigkeit im Sedimentierbehälter auch über dem vorgegebenen Pegel stehen und sedimentieren. Eine Sedimentierphase umfaßt somit bei der erfindungsgemäßen Vorrichtung jeweils eine Standphase der Zentrifuge und die nachfolgende Arbeitsphase. Dadurch, daß man das Rückfördern der über dem vorgegebenen Pegel stehenden Flüssigkeitsmenge erst kurz vor dem Ausschalten der Zentrifuge und damit kurz vor dem nach unten Fließen von Schlamm aus dem Inneren der Zentrifugentrommel vornimmt, werden die Beunruhigungen im Sedimentierbehälter, welche durch diese beiden Flüssigkeitsströme erzeugt werden, zeitlich zusammengefaßt, was für den Sedimentiervorgang insgesamt günstiger ist als verteilte Störungen.

Bei der erfindungsgemäßen Vorrichtung ist auch der tiefste Abschnitt der Zentrifugentrommel nie in direktem Kontakt mit der im Sedimentierbehälter befindlichen Flüssigkeit, kann diese also nicht verwirbeln.

Vorteilhafte Weiterbildungen der Erfindung sind in Unteransprüchen angegeben.

Mit der Weiterbildung der Erfindung gemäß Anspruch 2 wird erreicht, daß die Ansaugleitung der Rückförderpumpe ständig mit Flüssigkeit gefüllt ist.

Bei einer Vorrichtung gemäß Anspruch 3 kann man die Zentrifugentrommel wieder in Gang setzen, ohne zuvor das Volumen des beim vorangehenden Anhalten abgesunkenen Flüssigkeitsringes abpumpen zu müssen, wobei trotzdem gewährleistet ist, daß keine mechanische Berührung zwischen Zentrifugentrommel und der im Sedimentierbehälter befindlichen Flüssigkeit besteht.

Mit der Weiterbildung der Erfindung gemäß Anspruch 4 wird erreicht, daß auch dann, wenn man das zuvor abgesunkene Flüssigkeitsringvolumen in der nachfolgenden Arbeitsphase der Vorrichtung im Sedimentierbehälter beläßt, bei vollständigem Stromausfall das aus der Zentrifugentrommel abströmende Flüssigkeitsvolumen im Sedimentierbehälter aufgefangen werden kann.

Dabei wird dann gemäß Anspruch 5 erreicht, daß die Vorrichtung nichtwieder in Gang gesetzt werden kann, solange im Sedimentierbehälter nicht so viel freies Restvolumen zur Verfügung steht, daß die Flüssigkeitsmenge eines Flüssigkeitsringes aufgenommen werden kann.

Bei einer Vorrichtung gemäß Anspruch 6 kann in den Sedimentierbehälter während der Arbeitsphase auf Leckwegen Flüssigkeit eintreten, ohne daß die Gefahr eines Überlaufens des Sedimentierbehälters besteht.

Mit der Weiterbildung der Erfindung gemäß Anspruch 7 eine sehr kompakte Geometrie der durch Rückförderpumpe und Zentrifuge gebildeten Einheit erhalten, ohne daß die Gefahr besteht, daß die Rückförderpumpe direkt aus dem im Sedimentierbehälter gebildeten Sediment ansaugt.

Die Weiterbildung der Erfindung gemäß Anspruch 8 ist im Hinblick auf ein einfaches Abnehmen des Sedimentierbehälters vom Zentrifugengehäuse von Vorteil, da aus der nur verhältnismäßig geringe Größe aufweisenden Öffnung in seiner Deckenwand nur bei extremem Verkippen des Sedimentierbehälters Flüssigkeit austreten kann. Wird dagegen der Sedimentierbehälter beim Abnehmen in entgegengesetzter Richtung gekippt, so gelangt sein Inhalt in den allseitig geschlossenen Behälterabschnitt, so daß der Sedimentierbehälter gefahrlos transportiert und verschlossen werden kann.

Mit der Weiterbildung der Erfindung gemäß Anspruch 9 wird erreicht, daß im Inneren des Zentrifugengehäuses kein Sedimentieren von abgeschiedenen Festpartikeln in nennenswertem Ausmaße stattfindet.

Die Weiterbildung der Erfindung gemäß Anspruch 10 ist im Hinblick auf ein einfaches Herstellen der durch Rückförderpumpe und Zentrifuge gebildeten Einheit und im Hinblick auf ein einfaches Montieren der Rückförderpumpe von Vorteil.

Bei einer Vorrichtung gemäß Anspruch 10 erfolgt eine etwa notwendige Entlüftung der Rückförderpumpe ohne Schwierigkeiten.

Die Weiterbildung der Erfindung gemäß Anspruch 12 ermöglicht es, eine Rückförderpumpe mit kleiner Förderleistung zu verwenden; das zwangsweise Einspeisen in das Innere der Zentrifugentrommel erfolgt unter Verwendung einer Speisepumpe, die diese Aufgabe bezüglich des anfallenden Abwassers im stationären Betrieb der Vorrichtung erfüllt. Das Zuführen des verunreinigten Wassers zum Inneren der Zentrifugentrommel erfolgt dank der Speisepumpe unabhängig von der Lage der Abwasserquelle bezüglich der Zentrifuge: die Abwasserquelle kann höher und auch niederer liegen als die Zentrifugentrommel. Dies gibt besondere Freiheit bei der Installation der erfindungsgemäßen Vorrichtung in Praxisräumen.

Die Weiterbildung der Erfindung gemäß Anspruch 13 ist im Hinblick auf ein kompaktes Gesamtaggregat von Vorteil, welches sowohl die Zentrifuge als auch die Rückförderpumpe als auch die Speisepumpe umfaßt. Die Umlenkplatte verhindert, daß das vom Speisepumpen-Förderstutzen abgegebene Abwasser direkt zur Reinwasser-Ablauföffnung gelangt, vielmehr zuverlässig zur Umfangswand der Zentrifugentrommel gerichtet wird.

Mit der im Anspruch 14 angegebenen Maßnahme wird erreicht, daß das zugeführte Abwasser zwangsläufig rasch auf die Winkelgeschwindigkeit der Zentrifugentrommel gebracht wird.

Die Weiterbildung der Erfindung gemäß Anspruch 15 ist im Hinblick auf eine einfache Montage der Zentrifugentrommel von Vorteil.

Die Weiterbildung der Erfindung gemäß Anspruch 16 ist wiederum im Hinblick auf ein zwangsweises Zuführen des Abwassers zur Umfangswand der Zentrifugentrommel von Vorteil.

Bei einer Vorrichtung gemäß Anspruch 17 kann ein gesonderter Antrieb für die Speisepumpe entfallen, und zugleich ist sichergestellt, daß die Speisepumpe erst dann voll arbeitet, wenn auch die Zentrifugentrommel ihre Arbeitsdrehzahl erreicht hat.

Auch die Weiterbildung der Erfindung gemäß Anspruch 18 ist im Hinblick auf kompakten Aufbau der Vorrichtung von Vorteil.

Mit der im Anspruch 19 angegebenen Maßnahme wird ein zuverlässig runder Lauf der Zentrifugenwelle auch über lange Betriebszeiten hinweg gewährleistet.

Mit der im Anspruch 20 angegebenen Maßnahme wird ein Eindringen von Feststoffpartikeln in das Gleitlager für das untere Zentrifugenwellenende verhindert.

An vielen Arbeitsplätzen ist der Anfall an zu reinigendem Abwasser verhältnismäßig gering, so daß die Vorrichtung nicht ständig betrieben werden muß, was im Hinblick auf die Vermeidung unnötiger Geräusche vorteilhaft ist. Ein automatisches bedarfsgerechtes An- und Abschalten der Vorrichtung wird mit der Weiterbildung der Erfindung gemäß Anspruch 21 erreicht. Ein weiterer mit Anspruch 21 erhaltener Vorteil ist der, daß das Pumpenlaufrad der Speisepumpe wie leer läuft, der Arbeitsraum der Speisepumpe immer mit Flüssigkeit gefüllt bleibt. Auch dies ist im Hinblick auf die Unterdrückung von Geräuschen vorteilhaft.

Nachstehend wird die Erfindung anhand von Ausführungsbeispielen unter Bezugnahme auf die Zeichnung näher erläutert. In dieser zeigen:

Fig. 1: eine schematische Schnittansicht eines Gerätes zum Abscheiden von Amalgampartikeln und anderen Feststoffen aus dem in einer Zahnartzpraxis anfallenden Abwasser;

Fig. 2: einen axialen Schnitt durch ein praktisches Ausführungsbeispiel der mechanischen Teile eines Gerätes ähnlich zu dem in Fig. 1 gezeigten;

Fig. 3: einen Schnitt durch eine Rückförderpumpe des in Fig. 2 gezeigten Gerätes längs der Achse dieser Pumpe in einer senkrecht auf der Zeichenebene von Fig. 2 stehenden Ebene; und

Fig. 4: eine Aufsicht auf einen Deckel des Gehäuses der in Fig. 3 gezeigten Rückförderpumpe.

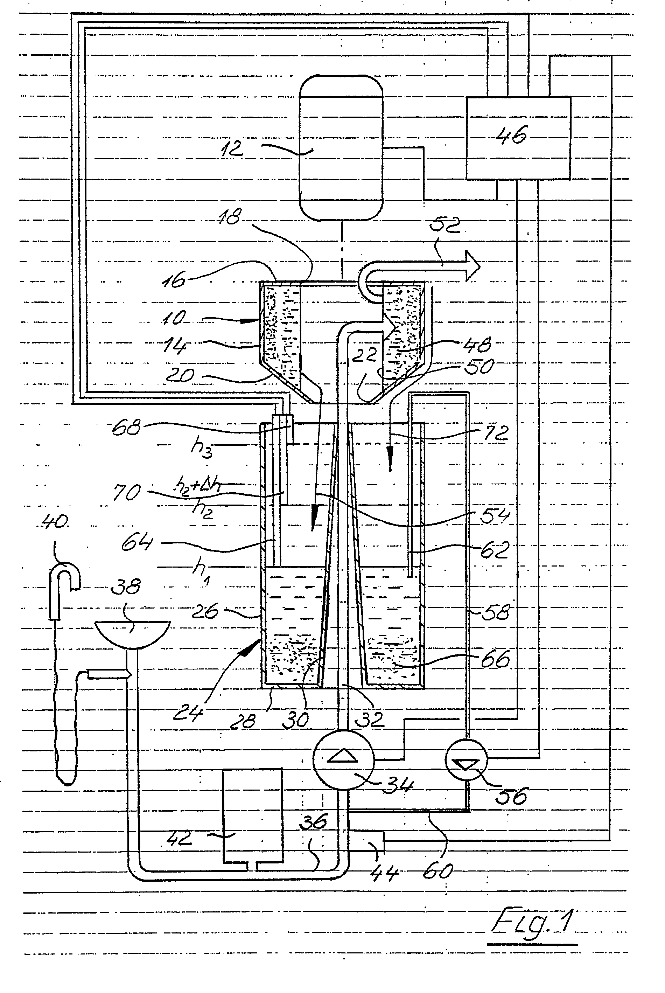

In Fig. 1 ist mit 10 insgesamt eine Zentrifugentrommel bezeichnet, die durch einen Elektromotor 12 angetrieben wird. Die Zentrifugentrommel 10 hat eine zylindrische Umfangswand 14, an deren oberen Rand ein radial nach innen verlaufender Überlaufflansch 16 angesetzt ist. Letzterer begrenzt eine Ablauföffnung 18 für gereinigtes Wasser. An dem unteren Rand der Umfangswand 14 ist ein kegelförmiger Boden 20 angebracht, dessen innenliegende untere Kante eine Ablauföffnung 22 für Schlamm begrenzt, wobei der Durchmesser der letzteren kleiner ist als der Durchmesser der Ablauföffnung 18.

Fluchtend unterhalb der Zentrifugentrommel 10 ist ein insgesamt mit 24 bezeichneter Sedimentierbehälter angeordnet, welcher eine zylindrische Umfangswand 26, einen Boden 28 und einen vom Boden bis zum oberen Rand der Umfangswand 26 hochgezogenen mittigen Rohrstutzen 30 aufweist. Durch letzteren ist eine Rohrleitung 32 hindurchgezogen, welche ins Innere der Zentrifugentrommel 10 hineingeführt ist und über welche zu reinigendes Abwasser gegen die Umfangswand 14 der Zentrifugentrommel 10 derart abgegeben wird, daß es nicht direkt die Ablauföffnung 18 erreichen kann. Dies ist schematisch durch das als Pfeil wiedergegebene Ende der Rohrleitung 32 angedeutet.

Die Rohrleitung 32 ist mit dem Ausgang einer Speisepumpe 34 verbunden, die einlaßseitig an eine Abwasserleitung 36 angeschlossen ist. Letztere erhält Abwasser von einem Speibecken 38 und einem Absaugschnorchel 40. An die Abwasserleitung 36 kann ein Zwischenspeicher 42 angeschlossen sein, der Abwassermengen solange sammelt, bis es sich lohnt, die durch die Zentrifugentrommel 10 und den Elektromotor 12 gebildete Abscheidezentrifuge in Gang zu setzen. Hierzu ist an die Abwasserleitung 36 in unmittelbarer Nachbarschaft der Speisepumpe 34 ein Druckfühler 44 angeschlossen, dessen Ausgangssignal auf einen der Eingänge einer Steuereinheit 46 gegeben wird, welche das Arbeiten des Elektromotors 12 und der Speisepumpe 34 steuert.

Der bisher beschriebene Teil des Gerätes zum Abscheiden von Amalgampartikeln und anderen Feststoffen aus dem über die Abwasserleitung 36 zugeführten Abwasser arbeitet folgendermaßen:

Liegt soviel Abwasser vor, daß sich ein Ingangsetzen des Gerätes lohnt, wird dies vom Druckfühler 44 der Steuereinheit 46 mitgeteilt. Diese setzt nun den Elektromotor 12 und - gegebenenfalls etwas seitlich verzögert - die Speisepumpe 34 in Gang, so daß das Feststoffe enthaltende Abwasser gegen die Umfangswand 14 der Zentrifugentrommel 10 gerichtet wird. Vor der Umfangswand 14 baut sich zunächst ein Wasserring 48 auf, bis dessen Innenfläche 50 den inneren Rand der Ablauföffnung 18 erreicht hat. Der Wasserring 48 läuft mit der Geschwindigkeit der Zentrifugentrommel 10 um, und auf Grund der Zentrifugalkrafteinwirkung bewegen sich die schweren Feststoffpartikel radial nach außen zur Umfangswand 14, während die radial innenliegenden Schichten des Wasserringes 48 von Feststoffpartikeln frei sind. Wird nun noch weiteres Abwasser zugeführt, so fließt eine entsprechend große Wassermenge aus den innenliegenden Schichten des Wasserringes 48 durch die Ablauföffnung 18 ab, wie in Fig. 1 schematisch durch einen Pfeil 52 angedeutet. Dieser Strom gereinigten Wassers wird in einem in Fig. 1 nicht näher gezeigten Zentrifugengehäuse, welches die Zentrifugentrommel 10 umgibt, gesammelt und von dort der öffentlichen Kanalisation zugeführt.

Bei diesem stationären Betrieb sammeln sich somit in den radial außenliegenden Bereichen der Zentrifugentrommel 10 immer mehr Feststoffe an. Wird das Gerät in einer Arbeitspause oder Abends abgeschaltet, so kommt die Zentrifugentrommel 10 zum Stillstand und der Wasserring 48 ist keinen Zentrifugalkräften mehr unterworfen. Das in ihm enthaltene Wasser fließt daher zusammen mit den Feststoffpartikeln unter Schwerkrafteinwirkung in den unter der Zentrifugentrommel 10 angeordneten Sedimentierbehälter 24, wie durch einen Pfeil 54 angedeutet. Im Sedimentierbehälter 24 findet eine weitere Trennung des Gemisches aus Flüssigkeit und Feststoffpartikeln durch Sedimentation statt. Werden keine zusätzlichen Maßnahmen getroffen, so würde der Sedimentierbehälter 24 offensichtlich früher oder später überlaufen, da ihm mit jedem Abschalten des Gerätes die Flüssigkeitsmenge eines Wasserringes 48 zugeführt wird.

Um den Flüssigkeitsstand im Sedimentierbehälter 24 eben falls auf einem stationären Wert zu halten, ist eine Rückfördereinrichtung vorgesehen, welche eine Rückförderpumpe 56, eine zu dieser führende Ansaugleitung 58 sowie eine von deren Förderstutzen zum Einlaß der Speisepumpe 34 zurückführende Förderleitung 60 umfaßt. Die Ansaugleitung 58 hat einen auf vorgegebene Tiefe in den Sedimentierbehälter 24 eintauchenden Leitungsabschnitt 62. Das offene Ende des letzteren liegt etwas tiefer als ein Pegel $h_1$, bei welchem ein erster, schematisch angedeuteter Pegelfühler 64 angeordnet ist. Dessen Ausgangssignal wird auf einen weiteren Eingang der Steuereinheit 46 gegeben, um die Rückförderpumpe 56 dann auszuschalten, wenn der Flüssigkeitsspiegel im Sedimentierbehälter 24 auf den Pegel $h_1$ abgefallen ist. Wie aus Fig. 1 ersichtlich, taucht das Ende des Leitungsabschnittes 62 dann immer noch in die Flüssigkeit ein, so daß die Ansaugleitung 58 mit Flüssigkeit gefüllt bleibt. Der Pegel $h_1$ ist so gewählt, daß am offenen Ende des Leitungsabschnittes 62 normalerweise durch Sedimentation gereinigte Flüssigkeit ansteht, während sich ein Sediment 66 aus Amalgampartikeln, Dentin und anderen Feststoffanteilen des gereinigten Abwassers am unteren Ende des Sedimentierbehälters 24 ausbildet. Die Rückförderpumpe 56 wird so gesteuert, daß spätestens vor dem Ausschalten des Elektromotors 12 der Flüssigkeitspegel $h_1$ im Sedimentierbehälter 24 eingestellt worden ist. Derjenige Pegel, der anschließend im Sedimentierbehälter 24 dann erhalten wird, wenn der Wasserring 48 nach Abschalten des Elektromotors 12 nach unten abgeflossen ist, ist in Fig. 1 mit $h_2$ bezeichnet. Offensichtlich muß der Sedimentierbehälter 24 zumindest die Höhe $h_2$ aufweisen.

Um in Notfällen, z.B. bei vollständigem Netzausfall, zu gewährleisten, daß das den Wasserring 48 in der Zentrifugentrommel 10 bildende Wasservolumen auf jeden Fall im Sedimentierbehälter 24 aufgenommen werden kann, müßte man dann, wenn der Sedimentierbehälter 24 nur die oben angesprochene Mindestgröße aufweist, das zwischen den Pegeln $h_2$ und $h_1$ liegende Wasservolumen des Sedimentierbehälters 24 sofort mit dem Einschalten des Gerätes durch die Rückförderpumpe 56 abziehen. Dieses Wasservolumen könnte somit während der Arbeitsphase des Gerätes nicht mehr durch Sedimentieren zerlegt werden, was auf die Sauberkeit des in die Kanalisation abgegebenen Wassers zwar keinen Einfluß hat, da das über die Rückförderpumpe 56 aus dem Sedimentierbehälter 24 abgezogene Wasser ja wieder durch die Zentrifugentrommel 10 geleitet wird, es wirde hierdurch aber der Wirkungsgrad des Gerätes verschlechtert.

Um nun zu ermöglichen, daß das Wasservolumen eines abgesunkenen Wasserringes 48 auch noch über die anschließende Arbeitsphase des Gerätes der Sedimentation ausgesetzt werden kann, hat der Sedimentierbehälter 24 doch größere Höhe bis über den Pegel $h_3$ hinaus, welcher dann erhalten wird, wenn man die Volumina zweier Wasserringe 48 auf den Pegel $h_1$ aufbauen würde. Der zwischen den Pegel $h_3$ und $h_2$ liegende Teilraum des Sedimentierbehälters 24 stellt somit einen Notaufnahmeraum dar. Ist auch er gefüllt, so darf das Gerät nicht mehr in Gang gesetzt werden. Um dies festzustellen, ist ein weiterer Pegelfühler 68 beim Pegel $h_3$ angeordnet, dessen Ausgangssignal ebenfalls der Steuereinheit 46 übermittelt wird und ein Wiedereinschalten des Elektromotors 12 und der Speisepumpe 34 solange verhindert, bis der Pegel im Sedimentierbehälter 24 wieder auf den Pegel $h_2$ abgesenkt worden ist. Dies wird von einem beim Pegel $h_2$ angeordneten weiteren Pegelfühler 70 festgestellt, der ebenfalls mit der Steuereinheit 46 verbunden ist. Das Ausgangssignal des Pegelfühlers 70 schaltet somit die Steuereinheit 46 für ein Wiedereinschalten des Elektromotors 12 und der Speisepumpe 34 frei.

Zur Erläuterung der aufeinanderfolgenden Arbeitsphasen des in Fig. 1 gezeigten Amalgam-Abscheidegerätes sei zunächst von einem Zustand ausgegangen, wie er sich nach Ausschalten des Gerätes aus vorherigem stationären Betrieb ergibt: Der Flüssigkeitsspiegel im Sedimentierbehälter 24 liegt dann beim Pegel $h_2$, Zentrifugentrommel 10, Speisepumpe 34 und Rückförderpumpe 56 stehen still. Durch Sedimentation bewegen sich die im abgesunkenen Wasserring 48 enthaltenen Feststoffpartikel im Sedimentierbehälter 24 nach unten, so daß die im Sedimentierbehälter 24 stehende Flüssigkeit in ihrem oberen Teilvolumen zunehmend klarer wird.

Wird nun ein neuer Abscheidezyklus benötigt (eingeleitet durch den Druckfühler 44), so werden der Elektromotor 12 und die Speisepumpe 34 von der Steuereinheit 46 in Gang gesetzt. In der Zentrifugentrommel 10 baut sich nun ein weiterer Wasserring 48 auf, dessen radial außenliegenden Bereiche zunehmend Feststoffpartikel enthalten. Über diese gesamte Abscheidephase hinweg kann die Sedimentation im Sedimentierbehälter 24 ungestört weiterlaufen.

Wird vom Druckfühler 44 angezeigt, daß nun kein Abwasser zur Abscheidung von Feststoffpartikeln mehr ansteht, so schaltet die Steuereinheit 46 den Elektromotor 12 und die Speisepumpe 34 nicht sofort ab; vielmehr erregt sie zunächst die Rückförderpumpe 56, worauf diese dann das zwischen den Pegeln $h_2$ und $h_1$ gelegene Wasservolumen aus dem Sedimentierbehälter 24 absaugt. Dieses Wasservolumen wird über die Speisepumpe 34 ins Innere der Zentrifugen trommel 10 geleitet, dort durch Zentrifugalkraft von noch enthaltenen Feststoffpartikeln befreit und strömt durch die Ablauföffnung 22 zur Kanalisation. Zeigt der Pegelfühler 64 das Erreichen des Pegels $h_1$ an, so schaltet die Steuereinheit 46 die Rückförderpumpe 56 und gleichzeitig auch den Elektromotor 12 und die Speisepumpe 34 ab. Der momentan in der Zentrifugentrommel 10 enthaltene Wasserring 48 bricht zusammen und fließt nach unten in den Sedimentierbehälter 24, der nun wieder bis zum Pegel $h_2$ gefüllt ist. Nun ist ein normaler Arbeitszyklus geschlossen.

Man erkennt, daß bei der oben beschriebenen Betriebsart des Abscheidegerätes ein Sedimentationszyklus mit einem vollen Arbeitszyklus zusammenfällt.

In der Praxis treten in Amalgam-Abscheidegeräten der hier interessierenden Art neben den schon besprochenen Flüssigkeitsströmen noch Leckströme zwischen der Zentrifugentrommel und dem Zentrifugengehäuse auf, welche durch geeignete Maßnahmen zwar klein gehalten aber nicht vollständig unterdrückt werden können. Diese Leckströme sind in Fig. 1 schematisch durch einen Pfeil 72 angedeutet.

Sind diese Leckströme groß oder wird die Zentrifuge über sehr lange Zeitspannen nicht angehalten, so könnte der Flüssigkeitsspiegel im Sedimentierbehälter 24 im Laufe der Zeit deutlich über den Pegel $h_2$ anwachsen, so daß der Sedimentierbehälter 24 im Notfalle nicht mehr einen ganzen weiteren Wasserring 48 aufnehmen könnte. Um dem zu begegnen, ist der Pegelfühler 70 als zwei Richtungs-Fühler ausgebildet, welcher dann, wenn der Pegel $h_2$ unterschritten wird, die Rückförderpumpe 56 ausschaltet, und dann, wenn der Pegel $h_2 + \Delta h$ erreicht wird, die Rückförderpumpe 56 einschaltet. Auf diese Weise werden in den Sedimentierbehälter 24 gelangende Leckwassermengen periodisch abgepumpt.

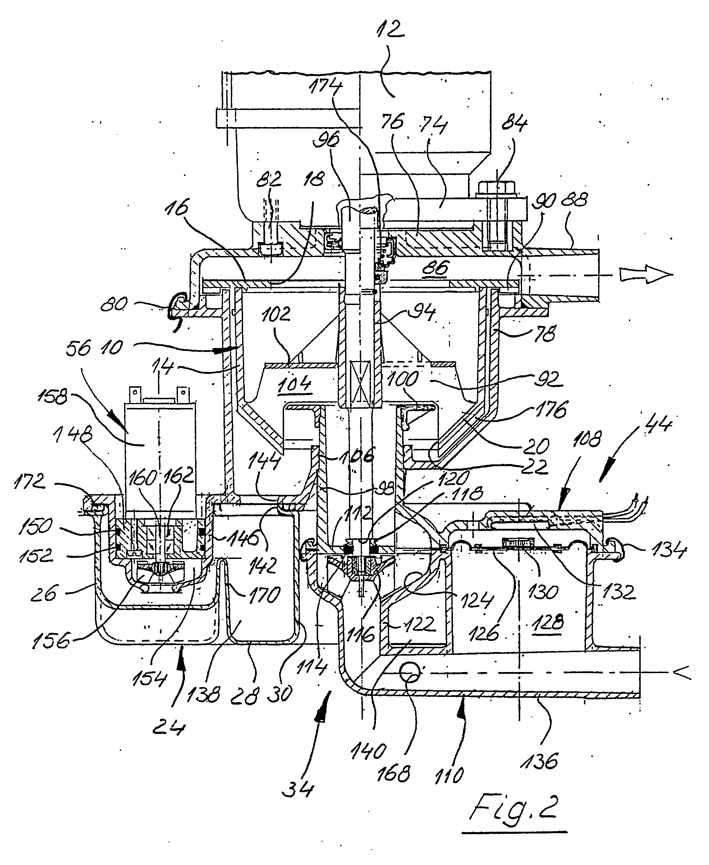

Fig. 2 zeigt einen axialen Schnitt durch ein praktisches Ausführungsbeispiel eines Gerätes zum Abscheiden von Amalgampartikeln und dergleichen aus dem Abwasser einer Zahnartzpraxis, welches nach dem gleichen Prinzip arbeitet wie obenstehend unter Bezugnahme auf Fig. 1 erläutert, bei welchem jedoch Zentrifuge, Speisepumpe und Rückförderpumpe sowie der Druckfühler zu einer besonders kompakten Einheit vereinigt sind. Bauelemente, die funktionell schon unter Bezugnahme auf Fig. 1 erläuterten Bauelementen entsprechen, sind wieder mit denselben Bezugszeichen versehen und werden nur noch bezüglich Unterschieden genauer erläutert.

In Fig. 2 ist 74 eine Montageplatte, welche das Abscheidegerät trägt und ihrerseits über nicht näher gezeigte Ständer auf dem Fußboden ruht oder auch an einer Gebäudewand fest angebracht ist. Die Montageplatte 74 trägt ein Zentrifugengehäuse, welches aus einem Gehäusedeckel 76 und einem im wesentlichen becherförmigen Gehäuseteil 78 besteht, welches die Zentrifugentrommel 10 unter geringem Abstand umgibt. Gehäusedeckel 76 und unteres Gehäuseteil 78 sind getrennte Spritzteile aus thermoplastischem Kunststoff, welche durch Federclips 80 lösbar zusammengehalten sind.

Der Elektromotor 12 ist durch Schrauben 82 am Gehäusedeckel 76 befestigt, letzterer ist seinerseits durch Schrauben 84 von der Montageplatte 74 getragen.

Der Gehäusedeckel 76 begrenzt einen mit der Ablauföffnung 18 in Verbindung stehenden Auslaßraum 86 für gereinigtes Wasser, der mit einem Auslaßstutzen 88 des Abscheidegerätes in Verbindung steht. Dieser ist über einen in Fig. 2 nicht gezeigten flexiblen Schlauch mit der öffentlichen Kanalisation verbunden.

Wie aus Fig. 2 ersichtlich, ist der Überlaufflansch 16 über die Umfangswand des becherförmigen Gehäuseteiles 78 hinausgezogen, so daß sich schon aus dieser Geometrie eine Labyrinthdichtung zwischen Zentrifugentrommel 10 und dem Gehäuseteil 78 ergibt. Zur zusätzlichen Abdichtung sind auf der Unterseite des überstehenden Randabschnittes des Überlaufflansches 16 Rückpumpflügel 90 aufgesetzt, welche in den Ringspalt zwischen Zentrifugentrommel 10 und Gehäuseteil 78 einzudringen suchendes Wasser zum Auslaßraum 86 zurückpumpen.

An den Boden der Zentrifugentrommel 10 sind sternförmig verteilt radiale Flügel 92 angeformt, welche zwei Funktionen erfüllen: Zum einen stellen sie eine mechanische Antriebsverbindung zwischen einem Nabenabschnitt 94 der Zentrifugentrommel 10 und deren Umfangswand 14 her. Zum anderen erteilen diese Flügel dem dem Inneren der Zentrifugentrommel 10 zugeführten Wasser rasch die Winkelgeschwindigkeit der Zentrifugentrommel. Der Nabenabschnitt 94 sitzt seinerseits auf einer langen Zentrifugenwelle 96, welche - falls gewünscht - eine entsprechende Verlängerung der Welle des Elektromotors 12 darstellen kann.

Durch die Schlamm-Ablauföffnung 22 der Zentrifugentrommel 10 ist ein Förderstutzen 98 der insgesamt wieder mit 34 bezeichneten Speisepumpe hindurchgeführt. Auf das obere freie Ende des Förderstutzens 98 ist ein Leitflansch 100 aufgesetzt, welcher ein starres Kunststoffspritzteil (linke Zeichnungshälfte) oder ein Gummi-Formteil (rechte Zeichnungshälfte) sein kann. Auf die Flügel 92 ist eine Umlenkplatte 102 aufgerastet, welche zusammen mit dem Leitflansch 100 eine radiale Kanalanordnung 104 begrenzt, über welche das vom Förderstutzen 98 abgegebene verunreinigte Abwasser zur Umfangswand 14 der Zentrifugentrommel 10 hingeleitet wird. Wie aus Fig. 2 ersichtlich, ist der Außendurchmesser der Umlenkplatte 102 größer als der lichte Durchmesser der Ablauföffnung 18, so daß die Kanalanordnung 104 hinter die Innenfläche eines in der Zentrifugentrommel 10 im stationären Betrieb ausgebildeten Wasserringes führt. Damit kann verunreinigtes Abwasser nicht direkt vom Förderstutzen 98 zur Reinwasser-Ablauföffnung 18 gelangen.

Der Förderstutzen 98 durchsetzt flüssigkeitsdicht eine Öffnung 106, die im Boden des unteren Gehäuseteiles 78 des Zentrifugengehäuses vorgesehen ist. Der Förderstutzen 98 ist an ein Spritzteil 108 angeformt, welches zugleich Deckel für das Gehäuse der Rückförderpumpe 56 und des Druckfühlers 44 bildet. Ähnlich bildet ein gemeinsames Spritzteil 110 den unteren Teil des Pumpengehäuses der Rückförderpumpe 56 und zugleich das untere Gehäuseteil des Druckfühlers 46.

Das Spritzteil 108 hat beim unteren Ende des Förderstutzens 98 eine transversale Stirnwand 112, in welchem ein unterer Endabschnitt der Zentrifugenwelle 96 unter Verwendung einer Keramikhülse 114 im Gleitsitz gelagert ist. Das durch die Stirnwand 112 hindurchgeführte äußerste Ende der Zentrifugenwelle 96 trägt ein Pumpenlaufrad 116 der Speisepumpe 34.

Die Oberseite der Keramikhülse 114 ist durch ein balgähnliches Dichtelement 118 gegen das Innere des Förderstutzens 98 abgedichtet, welches oben an einer Schulter 120 der Zentrifugenwelle 96 abgestützt ist und federnd an der oberen Stirnfläche der Keramikhülse 114 anliegt.

Wie aus Fig. 2 ersichtlich, gibt das Spritzteil 108 einen ebenso wie der Förderstutzen 98 zur Achse der Zentrifugenwelle 96 konzentrischen Einlaßstutzen 122 des Speisepumpengehäuses vor. Das vom Pumpenlaufrad 116 geförderte Wasser wird bei einem zunächst schräg nach oben und außen und dann schräg nach oben und innen verlaufenden Kanal 124 in den Förderstutzen 98 gedrückt, wobei jeweils eine Hälfte des Kanales 124 durch das Spritzteil 110, die andere Hälfte dieses Kanales durch das Spritzteil 108 vorgegeben ist.

Im Bereich des Druckfühlers 44 ist zwischen die beiden Spritzteile 108 und 110 eine Membran 126 eingespannt, unter welcher ein im Betrieb ein Luftpolster aufnehmender Arbeitsraum 128 des Druckfühlers 44 liegt. Die Oberseite der Membran 126 trägt einen kleinen Permanentmagneten 130, der mit einem fluchtend darüber im Spritzteil 108 angeordneten Reedkontakt zusammenarbeitet.

Eine Verlängerung der Membran 126 kann zugleich für die Abdichtung zwischen den Spritzteilen 108 und 110 im Bereich des Gehäuses der Speisepumpe 34 sorgen. Wie aus Fig. 2 ersichtlich, sind die Spritzteile 108 und 110 ebenfalls durch Clips 134 lösbar zusammengehalten.

Ein unterer, abgewinkelter Kanalabschnitt 136 des Spritzteiles 110 wird am Einsatzort an die Abwasserleitung 36 angeschlossen.

Bei dem Abscheidegerät gemäß Fig. 2 hat der Sedimentierbehälter 24 in Aufsicht gesehen in etwa die Form eines Hufeisens mit einem Brückenabschnitt 138 und seitlichen Schenkelabschnitten 140, welche die Speisepumpe 34 und den Druckfühler 44 seitlich umgreifen. Der Sedimentierbehälter 24 ist ein Blasformteil, dessen in Fig. 2 obenliegende Deckenwand nur im am weitesten links gelegenen Bereich offen ist, wie bei 142 angedeutet.

Die Öffnung 142 steht zum einen mit einer fluchtenden Öffnung 144 in Verbindung, die im Boden des becherförmigen Gehäuseteiles 78 vorgesehen ist und sich dort nur über einen verhältnismäßig kleinen Umfangswinkel (60 bis 90°) erstreckt. Die Öffnung 142 umgibt ferner ein unteres Gehäuseteil 146 der Rückförderpumpe 56, welches in Fortsetzung des Bodens des Gehäuseteiles 78 radial außerhalb der Umfangswand des Gehäuseteiles 78 angeformt ist. Dieses becherförmige untere Gehäuseteil 146 nimmt in seinem Inneren formschlüssig einen Gehäusedeckel 148 der Rückförderpumpe 56 auf. Letzterer ist mittels O-Ringen 150, 152 gegen die Innenfläche des unteren Gehäuseteiles 146 abgegrenzt und begrenzt zusammen mit letzterem einen Arbeitsraum 154, in welchem ein Pumpenlaufrad 156 der Rückförderpumpe 56 umläuft.

Der Gehäusedeckel 148 trägt einen elektrischen Antriebsmotor 158 geringer Leistung, dessen Welle 160 über Lager 162 flüssigkeitsdicht im Gehäusedeckel 148 gelagert ist.

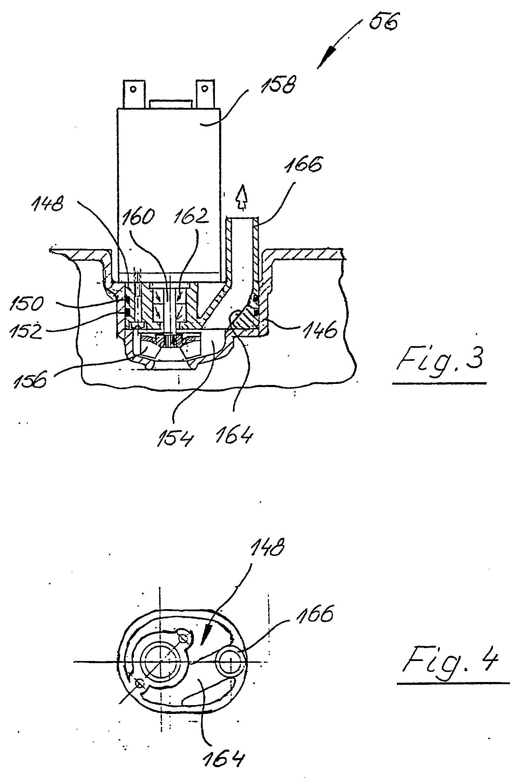

Wie aus den Fig. 3 und 4 ersichtlich ist, gibt der Gehäusedeckel 148 zugleich eine Auslaßspirale 164 vor, welche zu einem vertikalen Förderstutzen 166 der Rückförderpumpe 56 führt. Letztere ist über eine in der Zeichnung nicht wiedergegebene Schlauchverbindung mit einem Anschlußstutzen 168 des Kanalabschnittes 124 des unteren Spritzteiles 110 verbunden.

Man erkennt, daß die bewegten Teile der Rückförderpumpe 56 sehr leicht abgebaut und ersetzt werden können.

Das untere Gehäuseteil 146 der Rückförderpumpe 56 ragt in einen hochgezogenen Abschnitt des Sedimentierbehälters 24 hinein, welcher durch eine Zwischenwand 170 vom Hauptraum getrennt ist, in welchem die Sedimentation stattfindet. Die Rückförderpumpe 56 kann somit zwangsläufig nur aus dem über der Zwischenwand 170 liegenden Abschnitt des Sedimentierbehälters 24 Wasser ansaugen, also Wasser, welches durch Sedimentation gereinigt ist. Außerdem ist so zwangsläufig gewährleistet, daß der Arbeitsraum 154 der Rückförderpumpe 56 ständig mit Flüssigkeit gefüllt ist.

Zur Abdichtung des Sedimentierbehälters 24 gegen das Gerätegehäuse ist eine Dichtung 172 vorgesehen, welche die Öffnung 142 umgibt. Der Sedimentierbehälter 24 kann ebenfalls durch Federclips am Gerätegehäuse festgelegt sein.

In Fig. 2 ist ferner eine Dichtpackung 174 wiedergegeben, welche den Auslaßraum 86 gegen das Innere des Elektromotors 12 abdichtet. Ferner sind auf der Unterseite des Bodens 20 der Zentrifugentrommel 10 weitere Rückpumpflügel 176 vorgesehen, welche Flüssigkeitsleckströmen durch den Ringraum zwischen Zentrifugentrommel und dem becherförmigen Gehäuseteil 78 entgegenwirken.

Die Arbeitsweise des in den Fig. 2 bis 4 gezeigten Gerätes entspricht im wesentlichen der schon oben geschilderten des Gerätes nach Fig. 1. Das Gerät nach den Fig. 2 bis 4 zeichnet sich darüber hinaus durch einen sehr kompakten und niederen Aufbau aus. Dieser niedere Aufbau wird insbesondere durch die speziell gewählte Form des Sedimentierbehälters 24 erhalten, welcher in der Prinzipdarstellung nach Fig. 1 deshalb als verhältnismäßig hoch wiedergegeben wurde, um die verschiedenen Pegelstände im Sedimentierbehälter 24 deutlich darstellen zu können.

In Abwandlung des oben beschriebenen Ausführungsbeispieles kann man den Druckfühler 44 durch einen anderen Fühler ersetzen, der auf die Gegenwart von Wasser anspricht, z.B. einen aus zwei Elektroden gebildeten Leitfähigkeitsfühler, der direkt in das Spritzteil 108 oder 110 eingebettet ist, einen auf Kapizätsbasis arbeitenden Fühler usw..

Anstelle des balgähnlichen Dichtungselementes 118 kann auch einfach eine flache Gummischeibe verwendet werden, um die Durchtrittsstelle der Welle 96 durch die Stirnwand 112 des Gehäuses der Rückförderpumpe 56 abzudecken.

## Patentansprüche

1. Vorrichtung zum Abscheiden von feinen Feststoffpartikeln, insbesondere Amalgampartikeln, aus Abwasser, mit

a) einer durch einen Antriebsmotor in Drehung versetzbaren Zentrifugentrommel (10), welche aufweist:

aa) eine Umfangswand,

ab) einen an deren oberem Ende angebrachten radial nach innen ragenden Überlaufflansch (16), der eine Ablauföffnung (18) für gereinigtes Wasser vorgibt, sowie

ac) einen vom unteren Rand der Umfangswand (14) getragenen Boden (20), der eine Ablauföffnung (22) für an Feststoffpartikeln reichen Schlamm vorgibt, deren Durchmesser kleiner ist als der Durchmesser der Reinwasser-Ablauföffnung (18);

b) einem Sedimentierbehälter (24), der unter der Schlamm-Ablauföffnung (22) angeordnet ist; und c) eine Einrichtung zum Rückfördern desjenigen Teiles der im Sedimentierbehälter (24) befindlichen Flüssigkeit, der sich über einen vorgegebenen Pegel $(h_1)$ befindet, zum Zentrifugeneinlaß hin;

dadurch gekennzeichnet, daß

d) die Rückfördereinrichtung eine Rückförderpumpe (56) mit vom Zentrifugen-Antriebsmotor (12) unabhängig erregbarem Pumpen-Antriebsmotor (158) aufweist;

e) eine Ansaugleitung (58) zur Rückförderpumpe (56) zumindest bis zu dem vorgegebenen Pegel $(h_1)$ in den Sedimentierbehälter (24) eintaucht und eine von der Rückförderpumpe (56) wegführende Förderleitung (60) mit dem Zentrifugeneinlaß verbunden ist; und

f) das Restvolumen des Sedimentierbehälters (24) über dem vorgegebenen Pegel $(h_1)$ mindestens gleich dem maximalen Volumen des in der Zentrifugentrommel (10) ausgebildeten Flüssigkeitsringes (48) ist und die tiefste Stelle der Zentrifugentrommel (10) über dem vorgegebenen Pegel $(h_1)$ liegt.

2. Vorrichtung nach Anspruch 1, dadurch gekennzeichnet, daß die Ansaugleitung (58) tiefer in den Sedimentierbehälter (24) eintaucht als dem vorgegebenen Pegel $(h_1)$ entspricht und die Rückförderpumpe (56) durch einen Pegelfühler (64) abgeschaltet wird, welcher bei dem vorgegebenen Pegel $(h_1)$ angeordnet ist.

3. Vorrichtung nach Anspruch 1 oder 2, dadurch gekennzeichnet, daß die tiefste Stelle der Zentrifugentrommel (10) über demjenigen Pegel ($h_2$) liegt, welcher über dem vorgegebenen ersten Pegel ($h_1$) durch Zugabe der maximal im Flüssigkeitsring (48) enthaltenen Flüssigkeitsmenge erhalten wird.

4. Vorrichtung nach Anspruch 3, dadurch gekennzeichnet, daß das Restvolumen des Sedimentierbehälters (24) über dem vorgegebenen ersten Pegel ($h_1$) mindestens gleich dem zweifachen maximalen Flüssigkeitsringvolumen ist.

5. Vorrichtung nach Anspruch 4, dadurch gekennzeichnet, daß ein weiterer Pegelfühler (70) bei dem zweiten Pegel ($h_2$) angeordnet ist, welcher um ein Flüssigkeitsringvolumen über dem ersten vorgegebenen Pegel ($h_1$) liegt, wobei dieser weitere Pegelfühler die Rückförderpumpe (56) einschaltet, wenn der zweite Pegel ($h_2$) um ein vorgegebenes Maß ($\Delta h$) überschritten ist, und wieder ausschaltet, wenn der zweite Pegel ($h_2$) wieder erreicht ist.

6. Vorrichtung nach einem der Ansprüche 1 bis 5, gekennzeichnet durch einen beim höchst zulässigen Pegel ($h_3$) des Sedimentierbehälters (24) angeordneten weiteren Pegelfühler (68), welcher beim Eintauchen in Flüssigkeit ein Zuführen von zu reinigendem Abwasser und ein Anschalten des Zentrifugen-Antriebsmotors (12) verhindert.

7. Vorrichtung nach einem der Ansprüche 1 bis 6, dadurch gekennzeichnet, daß die Ansaugöffnung der Rückförderpumpe (56) mit einem seitlichen Abteil des Sedimentierbehälters (24) in Verbindung steht, welches durch eine Überlaufwand (170) vom eigentlichen Sedimentierabteil getrennt ist.

8. Vorrichtung nach einem der Ansprüche 1 bis 7, dadurch gekennzeichnet, daß der Sedimentierbehälter (24) über kleine Umfangserstreckung aufweisende Öffnungen (142, 144) in seiner Deckenwand bzw. dem Boden des Zentrifugengehäuses (76, 78) mit dem Inneren der Zentrifugentrommel (10) strömungsmäßig verbunden ist.

9. Vorrichtung nach Anspruch 8, dadurch gekennzeichnet, daß der Boden des Zentrifugengehäuses (76, 78) zu der in ihm vorgesehenen Öffnung (144) hin abfällt.

10. Vorrichtung nach einem der Ansprüche 7 bis 9, gekennzeichnet durch ein Unterteil (146) des Gehäuses der Rückförderpumpe (56), welches als an das Zentrifugengehäuse (76, 78) angeformter Becher ausgebildet ist und durch einen Deckel des Gehäuses der Rückförderpumpe (56), welcher den Antriebsmotor (158) zusammen mit dem Pumpenlaufrad (156) trägt, wobei der Gehäusedeckel (148) dicht (150, 152) jedoch lösbar in das becherförmige Gehäuseunterteil (146) von oben eingepaßt ist.

11. Vorrichtung nach Anspruch 10, dadurch gekennzeichnet, daß der Gehäusedeckel (148) einen vertikalen Auslaßstutzen (166) trägt.

12. Vorrichtung nach einem der Ansprüche 1 bis 11, dadurch gekennzeichnet, daß die von der Rückförderpumpe (56) beaufschlagte Förderleitung (60) mit dem Einlaß einer Speisepumpe (34) verbunden ist, welche zu reinigendes Abwasser zwangsweise ins Innere der Zentrifugentrommel (10) drückt.

13. Vorrichtung nach Anspruch 12, dadurch gekennzeichnet, daß die Speisepumpe (34) einen den Boden des Zentrifugengehäuses (76, 78) dicht durchsetzenden, die Schlamm-Ablauföffnung (22) der Zentrifugentrommel (10) unter Spiel durchsetzenden und ins Innere der Zentrifugentrommel (10) ragenden Förderstutzen (98) aufweist und im Inneren der Zentrifugentrommel (10) dem freien Ende des Speisepumpen-Förderstutzens (98) gegenüberliegend eine transversale kreisförmige Umlenkplatte (102) vorgesehen ist, deren Durchmesser größer ist als der Durchmesser der Reinwasser-Ablauföffnung (18).

14. Vorrichtung nach Anspruch 13, dadurch gekennzeichnet, daß die Zentrifugentrommel (10) sternförmig verteilte radiale Flügel (92) aufweist, welche sich unter die Umlenkplatte (102) erstrecken.

15. Vorrichtung nach Anspruch 14, dadurch gekennzeichnet, daß die Flügel (92) der Zentrifugentrommel (10) axial über die Umlenkplatte (102) hochgezogene Abschnitte haben, auf welchen die Umlenkplatte (102) verrastet ist.

16. Vorrichtung nach einem der Ansprüche 13 bis 15, dadurch gekennzeichnet, daß der Speisepumpen-Förderstutzen (98) am freien Ende einen der Umlenkplatte (102) unter Abstand gegenüberliegenden Leitring (100) trägt.

17. Vorrichtung nach einem der Ansprüche 12 bis 16, dadurch gekennzeichnet, daß das Pumpenlaufrad (116) der Speisepumpe (34) auf der Zentrifugenwelle (96) sitzt.

18. Vorrichtung nach Anspruch 17, dadurch gekennzeichnet, daß das Pumpenlaufrad (116) der Speisepumpe (34) ein Kreiselpumpenrad ist und das Gehäuse (108, 110) der Speisepumpe (34) einen axialen Ansaugstutzen (122) und den ebenfalls axialen Förderstutzen (98) aufweist, wobei letzterer über einen radiale Erstreckungskomponenten aufweisenden Verbindungskanal (124) mit dem Arbeitsraum der Speisepumpe (34) verbunden ist.

19. Vorrichtung nach Anspruch 18, dadurch gekennzeichnet, daß die Zentrifugenwelle (96) in einer laufradseitigen Stirnwand (112) des Speisepumpen-Förderstutzens (98) unter Verwendung einer Keramikhülse (114) gelagert ist.

20. Vorrichtung nach Anspruch 19, dadurch gekennzeichnet, daß die Keramikhülse (114) durch eine elastische Dichtung (118) gegen das Innere des Speisepumpen-Förderstutzens (98) abgedeckt ist, welche an einer Schulter (120) der Zentrifugenwelle (96) abgestützt ist.

21. Vorrichtung nach einem der Ansprüche 12 bis 20, gekennzeichnet durch einen beim Einlaß der Speisepumpe (34) angeordneten Druckfühler (44), oder auf die Gegenwart von Wasser ansprechenden Fühler, durch welchen der Antriebsmotor (12) der Zentrifugentrommel (10) schaltbar ist.

22. Vorrichtung nach Anspruch 21, dadurch gekennzeichnet, daß der Druckfühler (44) ein vertikales Fühlergehäuse (108, 110) aufweist, welches durch eine Schaltmembran (126) in zwei Arbeitsräume unterteilt ist.

## Claims

1. Apparatus for separating fine solid particles, in particular amalgam particles, from waste water, with
a) a centrifuge drum (10) able to be set in rotation by a drive motor, which drum comprises:
aa) a peripheral wall,
ab) an overflow flange (16) projecting radially inwards and located at its upper end, which defines a discharge opening (18) for purified water, as well as
ac) a base (20) supported by the lower edge of the peripheral wall (14), which base defines a discharge opening (22) for sludge rich in solid particles, the diameter of which is less than the diameter of the pure water discharge opening (18);
b) a sedimentation container (24), which is located below the sludge discharge opening (22); and
c) a device for returning that part of the liquid located in the sedimentation container (24), which is located above a given level ($h_1$), to the centrifuge inlet; characterised in that
d) the return device comprises a return pump (56) with pump drive motor (158) able to be energized independently of the centrifuge drive motor (12);
e) a suction line (58) to the return pump (56) is immersed at least up to the given level ($h_1$) in the sedimentation container (24) and a conveying line (60) leading away from the feed pump (56) is connected to the centrifuge inlet; and
f) the residual volume of the sedimentation container (24) above the given level ($h_1$) is at least equal to the maximum volume of the liquid ring (48) formed in the centrifuge drum (10) and the deepest point of the centrifuge drum (10) lies above the given level ($h_1$).

2. Apparatus according to Claim 1 characterised in that the suction line (58) is immersed deeper in the sedimentation container (24) at the given level ($h_1$) and the return pump (56) is switched off by a level sensor (64), which is located at the given level ($h_1$).

3. Apparatus according to Claim 1 or 2, characterised in that the lowest point of the centrifuge drum (10) lies above that level ($h_2$), which is obtained above the given first level ($h_1$) by the addition of the maximum quantity of liquid contained in the liquid ring (48).

4. Apparatus according to Claim 3, characterised in that the residual volume of the sedimentation container (24) above the given first level ($h_1$) is at least equal to twice the maximum volume of the liquid ring.

5. Apparatus according to Claim 4, characterised in that a further level sensor (70) is located at the second level ($h_2$) which lies by a liquid ring volume above the first given level ($h_1$), this further level sensor switching on the return pump (56) when the second level ($h_2$) is exceeded by a given amount ($\Delta h$) and switches it off again when the second level ($h_2$) is again reached.

6. Apparatus according to one of Claims 1 to 5, characterised by a further level sensor (68) located at the highest admissible level ($h_3$) of the sedimentation container (24), which sensor (68), when immersed in liquid, prevents a supply of waste water to be purified and starting-up of the centrifuge drive motor (12).

7. Apparatus according to one of Claims 1 to 6, characterised in that the suction opening of the return pump (56) is connected to a lateral compartment of the sedimentation container (24), which is separated by an overflow wall (170) from the actual sedimentation compartment.

8. Apparatus according to one of Claims 1 to 7, characterised in that the sedimentation container (24) is connected as regards flow by way of openings (142, 144) having a small peripheral extent in its top wall or the base of the centrifuge housing (76, 78), to the inside of the centrifuge drum (10).

9. Apparatus according to Claim 8, characterised in that the base of the centrifuge housing (76, 78) slopes towards the opening (144) provided therein.

10. Apparatus according to one of Claims 7 to 9, characterised by a lower part (146) of the housing of the return pump (56), which is constructed as a cup integrally formed on the centrifuge housing (76, 78) and by a cover of the housing of the return pump (56), which supports the drive motor (158) together with the pump impeller (156), the housing cover (148) being fitted from above in a tight (150, 152) but releasable manner in the cup-shaped lower part of the housing (146).

11. Apparatus according to Claim 10, characterised in that the housing cover (148) supports a vertical outlet connection (166).

12. Apparatus according to one of Claims 1 to 11, characterised in that the conveying line (60) receiving liquid from the return pump (56) is connected to the inlet of a feed pump (34), which forces waste water to be purified into the inside of the centrifuge drum (10).

13. Apparatus according to Claim 12, characterised in that the feed pump (34) comprises a delivery connection (98) passing in a tight manner through the base of the centrifuge housing (76, 78), passing through the sludge discharge opening (22) of the centrifuge drum (10) with clearance and projecting into the inside of the centrifuge drum (10) and a transverse, circular deflection plate (102) is provided lying opposite the free end of the feed pump delivery connection (98) inside the centrifuge drum (10), the diameter of which plate (102) is greater than the diameter of the pure water discharge opening (18).

14. Apparatus according to Claim 13, characterised in that the centrifuge drum (10) comprises radial vanes (92) distributed radially in the shape of a star, which extend below the deflection plate (102).

15. Apparatus according to Claim 14, characterised in that the vanes (92) of the centrifuge drum (10) have sections raised axially above the deflection plate (102), on which the deflection plate (102) is engaged.

16. Apparatus according to one of Claims 13 to 15, characterised in that at the free end, the feed pump delivery connection (98) supports a guide ring (100) located at a distance opposite the deflection plate (102).

17. Apparatus according to one of Claims 12 to 16, characterised in that the pump impeller (116) of the feed pump (34) is seated on the centrifuge shaft (96).

18. Apparatus according to Claim 17, characterised in that the pump impeller (116) of the feed pump (34) is a centrifugal pump impeller and the housing (108, 110) of the feed pump (34) comprises an axial suction connection (122) and the likewise axial delivery connection (98), the latter being connected to the working chamber of the feed pump (34) by way of a connecting channel (124) having a radial extent component.

19. Apparatus according to Claim 18, characterised in that the centrifuge shaft (96) is mounted in an end wall (112) of the feed pump delivery connection (98) adjacent the impeller, using a ceramic sleeve (114).

20. Apparatus according to Claim 19, characterised in that the ceramic sleeve (114) is covered by a resilient gasket (118) with respect to the inside of the feed pump delivery connection (98), which is supported on a shoulder (120) of the centrifuge shaft (96).

21. Apparatus according to one of Claims 12 to 20, characterised by a pressure sensor (44) or a sensor responding to the presence of water located at the inlet of the feed pump (34), by which the drive motor (12) of the centrifuge drum (10) can be operated.

22. Apparatus according to Claim 21, characterised in that the pressure sensor (44) comprises a vertical sensor housing (108, 110), which is divided into two working chambers by a switching membrane (126).

**Revendications**

1. Dispositif de séparation de petites particules solides, en particulier de particules d'amalgame, d'eau usée, comportant:

  a) un panier (10) de centrifugeuse pouvant être mis en rotation par un moteur de commande et présentant:

  aa) une paroi périphérique,

  ab) une colleretts de trop-plein (16) installée à son extrémité supérieure et se projetant radialement vers l'intérieur, laquelle définit un orifice d'évacuation (18) pour l'eau épurée, ainsi que ac) un fond (20) supporté par le bord inférieur de la paroi périphérique (14), lequel définit un orifice d'évacuation (22) pour la boue riche en particules solides, dont le diamètre est plus petit que le diamètre de l'orifice d'évacuation (18) de l'eau épurée;

  b) un vase de sédimentation (24) disposé sous l'orifice d'évacuation (22) de la boue; et

  c) un dispositif permettant de refouler vers l'entrée de la centrifugeuse le volume de liquide se trouvant dans le vase de sédimentation (24), au-dessus d'un niveau prédéfini (h₁), caractérise en ce que

  d) le dispositif de refoulement présente une pompe de refoulement (56) comportant un moteur de commande (158) pouvant être activé indépendamment du moteur de commande (12) de la centrifugeuse;

  e) un tuyau d'aspiration (58) vers la pompe de refoulement (56) plonge dans le vase de sédimentation (24) au moins jusqu'au niveau prédéfini (h1) et un tuyau de refoulement (60) quittant la pompe de refoulement (56) est relié à l'entrée de la centrifugeuse; et

  f) le volume restant du vase de sédimentation (24) au-dessus du niveau prédéfini (h₁) est au moins égal au volume maximal de l'anneau liquide (48) formé dans le panier (10) de la centrifugeuse et le point le plus bas du panier (10) de la centrifugeuse se trouve au-dessus du niveau prédéfini (h₁).

2. Dispositif suivant la revendication 1, caractérisé en ce que le tuyau d'aspiration (58) plonge dans le vase de sédimentation (24) plus bas que le niveau correspondant au niveau prédéfini (h₁) et en ce que la pompe de refoulement (56) est mise en/hors fonction par un détecteur de niveau (64) installé à hauteur du niveau prédéfini (h₁).

3. Dispositif suivant la revendication 1 ou 2, caractérisé en ce que le point le plus bas du panier (10) de la centrifugeuse se trouve au-dessus du niveau (h₂), lequel est obtenu en ajoutant au premier niveau prédéfini (h₁) le volume maximum de liquide contenu dans l'anneau liquide (48).

4. Dispositif suivant la revendication 3, caractérisé en ce que le volume restant du vase de sédimentation (24) au-dessus du premier niveau prédéfini (h₁) est au moins égal à deux fois le volume maximum de l'anneau liquide (48).

5. Dispositif suivant la revendication 4, caractérisé en ce qu'un autre détecteur de niveau (70) est installé à hauteur du deuxième niveau (h₂), lequel se trouve au-dessus du premier niveau prédéfini (h₁) de façon à correspondre à un volume de l'anneau liquide (48), cet autre détecteur de niveau mettant en fonction la pompe de refoulement (56) lorsque le deuxième niveau (h₂) est dépassé d'une quantité prédéfinie de liquide (Δh) et la mettant hors fonction lorsque le deuxième niveau (h₂) est de nouveau atteint.

6. Dispositif suivant une des revendications 1 à 5, caractérisé en ce qu'il y est prévu un autre détecteur de niveau (68) installé à hauteur du niveau supérieur admissible (h₃) du vase de sédimentation (24), lequel détecteur empêche une alimentation en eau usée à épurer et une mise en fonction du moteur de commande (12) de la centrifugeuse, lorsqu'il se trouve plongé dans du liquide.

7. Dispositif suivant une des revendications 1 à 6, caractérisé en ce que l'orifice d'aspiration de la pompe de refoulement (56) communique avec un compartiment latéral du vase de sédimentation (24), lequel compartiment est séparé du compartiment de sédimentation proprement dit par une paroi de trop-plein (170).

8. Dispositif suivant une des revendications 1 à 7, caractérisé en ce que le vase de sédimentation (24) communique avec l'intérieur du panier (10) de la centrifugeuse par l'intermédiaire d'orifices (142, 144) présentant des petits rebords périphériques prévus respectivement dans sa paroi supérieure et dans le fond de la cage (76, 78) de la centrifugeuse.

9. Dispositif suivant la revendication 8, caractérisé en ce que le fond de la cage (76, 78) de la centrifugeuse est incliné en direction de l'orifice (144) prévu dans celui-ci.

10. Dispositif suivant une des revendications 7 à 9, caractérisé en ce qu'il y est prévu une partie inférieure (146) présentant la forme d'un godet solidaire de la cage (76, 78) de la centrifugeuse et formant la cage de la pompe de refoulement (56), et un couvercle (148) de la cage de la pompe de refoulement (56), lequel supporte le moteur de commande (158) ainsi que la roue mobile (156) de la pompe de refoulement (56), le couvercle (148) étant inséré par le haut de manière étanche (150, 152), mais toutefois amovible, dans la partie inférieure en forme de godet (146).

11. Dispositif suivant la revendication 10 caractérisé en ce que le couvercle (148) de la cage de la pompe de refoulement (56) comporte un manchon de sortie (166) vertical.

12. Dispositif suivant une des revendications 1 à 11, caractérisé en ce que le tuyau de refoulement (60) quittant la pompe de refoulement (56) est relié à l'entrée d'une pompe d'alimentation (34), laquelle refoule l'eau usée à épurer à l'intérieur du panier (10) de la centrifugeuse.

13. Dispositif suivant la revendication 12, caractérisé en ce que la pompe d'alimentation (34) présente un manchon de refoulement (98) traversant de manière étanche le fond de la cage (76, 78) de la centrifugeuse ainsi que, avec un certain jeu, l'orifice d'évacuation (22) de la boue hors du panier (10) de la centrifugeuse et se projetant à l'intérieur du panier (10) de la centrifugeuse, et en ce qu'à l'intérieur du panier (10) de la centrifugeuse, l'extrémité libre du manchon de refoulement (98) de la pompe d'alimentation (34) est prévue en face d'une plaque déflectrice (102) transversale de forme circulaire, dont le diamètre est supérieur au diamètre de l'orifice d'évacuation (18) de l'eau épurée.

14. Dispositif suivant la revendication 13, caractérisé en ce que le panier (10) de la centrifugeuse présente des ailettes radiales (92) disposées en étoile, lesquelles s'étendent sous la plaque déflectrice (102).

15. Dispositif suivant la revendication 14, caractérisé en ce que les ailettes (92) du panier (10) de la centrifugeuse possèdent des parties dressées axialement vers le haut au-dessus de la plaque déflectrice (102), sur lesquelles la plaque déflectrice (102) se trouve maintenue.

16. Dispositif suivant une des revendications 13 à 15, caractérisé en ce que le manchon de refoulement (98) de la pompe d'alimentation (34) supporte à son extrémité libre un anneau déflecteur (100) disposé en face de la plaque déflectrice (102), à une certaine distance de celle-ci.

17. Dispositif suivant une des revendications 12 à 16, caractérisé en ce que la roue mobile (116) de la pompe d'alimentation (34) est montée sur l'arbre (96) de la centrifugeuse.

18. Dispositif suivant la revendication 17, caractérisé en ce que la roue mobile (116) de la pompe d'alimentation (34) est une roue de pompe centrifuge et en ce que la cage (l08, 110) de la pompe d'alimentation (34) présente un manchon d'aspiration axial (122) ainsi que le manchon de refoulement (98) également axial, ce dernier étant relié par l'intermédiaire d'un canal de communication (124) présentant des parties s'étendant radialement, à la chambre intérieure de la pompe d'alimentation (34).

19. Dispositif suivant la revendication 18, caractérisé en ce que l'arbre (96) de la centrifugeuse est logé dans une paroi terminale (112) du manchon de refoulement (98) de la pompe d'alimentation (34), du côté de la roue mobile (116) de celle-ci, au moyen d'une douille de céramique (114).

20. Dispositif suivant la revendication 19, caractérisé en ce que la douille de céramique (114) est rendue étanche par rapport à l'intérieur du manchon de refoulement (98) de la pompe d'alimentation (34) au moyen d'un joint souple (118) appuyé contre un épaulement (120) de l'arbre (96) de la centrifugeuse.

21. Dispositif suivant une des revendications 12 à 20, caractérisé en ce qu'un capteur de pression (44) destiné à mettre en/hors fonction le moteur de commande (12) du panier (10) de la centrifugeuse, se trouve installé à l'entrée de la pompe d'alimentation (34).

22. Dispositif suivant la revendication 21, caractérisé en ce que le capteur de pression (44) présente une cage verticale (108, 110) divisée en deux chambres par une membrane de commutation (126).

*Fig.1*

*Fig.2*

Fig.3

Fig.4